**Europäisches Patentamt**

(19) **European Patent Office**

**Office européen des brevets**

(11) Numéro de publication: **0 169 085**

**B1**

(12) **FASCICULE DE BREVET EUROPÉEN**

(45) Date de publication du fascicule du brevet:
14.12.88

(51) Int. Cl.⁴: **C 08 L 77/00,** C 08 K 5/34,
C 08 K 5/05

(21) Numéro de dépôt: **85400926.3**

(22) Date de dépôt: **13.05.85**

(54) Compositions à base de polyamides à combustibilité retardée.

(30) Priorité: **21.05.84 FR 8407879**

(43) Date de publication de la demande:
**22.01.86 Bulletin 86/4**

(45) Mention de la délivrance du brevet:
**14.12.88 Bulletin 88/50**

(84) Etats contractants désignés:
**AT BE CH DE FR GB IT LI LU NL SE**

(56) Documents cité:
**EP-A-0 017 925
FR-A-1 401 842**

**CHEMICAL ABSTRACTS, vol. 85, 1976, page 40, no. 95216s, Columbus, Ohio, US; & JP - A - 76 54 654 (TORAY INDUSTRIES INC.) 13-05-1976
CHEMICAL ABSTRACTS, vol. 99, 1983, page 31, no. 159337f, Columbus, Ohio, US; B.A. ZHUBANOV et al.: "Study of the effect of some factors on linear pyrolysis and combustion of polyamide 6", & FIZ. GORENIYA VZRYVA 1983, 19(4), 91-92**

(73) Titulaire: **ATOCHEM, 4 & 8, Cours Michelet La Défense 10, F-92800 Puteaux (FR)**

(72) Inventeur: **Morival, Geneviève, Domaine de Maubuisson, F-27470 Sequigny (FR)**
Inventeur: **Hervy, Catherine, F-27300 Lebourg-Plasnes par Bernay (FR)**

LIBER, STOCKHOLM 1988

**0 169 085**

## Description

Du fait de leurs remarquables propriétés physiques, les polyamides ont trouvé de nombreuses applications.

Malgré tout, dans certains domaines spéciaux, tels, entre autres ceux des industries automobile, aéronautique, électrique... leur développement a été limité du fait de leur aptitude trop grande à brûler.

Pour remédier à ceci, de nombreuses solutions ont déjà été proposées mais aucune ne s'est révélée entièrement satisfaisante dans la pratique.

C'est ainsi que les agents retardateurs de combustion classiques à base de dérivés organiques halogénés tels, par exemple, que le décabromodiphényléther, seul ou en association avec l'oxyde d'antimoine, sont générateurs d'acides halogénés qui se dégagent lors de la fabrication ou de l'utilisation des polyamides ainsi chargés; il en résulte des risques de corrosion pour l'appareillage et des nuisances pour l'environnement.

Le phosphore qui a été également proposé (Brevet US n° 3 778 407) n'est pas simple d'emploi et, lui, aussi, confère aux polyamides auxquels il a été incorporé une teinte rougeâtre.

De réels progrès ont été obtenus par l'utilisation de cyanurate de mélamine (brevets France n°s 7 923 111 et 8 204 446, EP-0 019 768) mais ce composé n'est pas aussi efficace, à poids égal, que certains composés à haute teneur en chlore ou brome.

D'autre part, il ne faut pas perdre de vue que, si les additifs cités ci-dessus réduisent l'aptitude à la combustion des matières plastiques dans lesquels ils sont incorporés, aptitude mesurée par l'Indice d'Oxygène Limite (selon la norme NFT 51 071 ou ASTM D 2863), par contre, ils sont sans action sur l'aptitude au gouttage, caractéristique exigée en plus de celle citée ci-dessus par les normes ASTM D 635 et l'essai de combustion UL 94 décrit dans le bulletin 94 des Underwriters Laboratories.

Nous avons trouvé et, ceci fait l'objet de la présente invention, que l'on réduit et l'aptitude à la combustion et l'aptitude au gouttage des polyamides, si on leur incorpore conjointement du cyanurate de mélamine et un polyol possédant au moins quatre fois la fonction alcool.

L'association cyanurate de mélamine-polyol est efficace sur les polyamides purs ou additionnés des charges habituelles telles que colorants, stabilisants chaleur, anti-UV... mais également, ce qui est plus surprenant, sur les qualités plastifiées contenant, entre autres plastifiants, du butylbenzène sulfonamide ou du para-hydroxybenzoate d'octyle ou leur mélange.

On observe également des améliorations pour les qualités chargées, par exemple, de talc, fibres de verre, de carbone, etc...

Les compositions de polyamides à combustibilité retardée suivant l'invention doivent contenir:

a) au moins 35 % en poids de polyamides,
b) de 0 à 30 % en poids d'additifs, charges ou plastifiants,
c) de 1 à 25 % en poids de cyanurate de mélamine,
d) de 0,5 à 10 % en poids de polyols,
la somme de tous ces constituants devant dans chaque cas être égale à 100.

Par cyanurate de mélamine, nous entendons les composés résultant de l'action de la mélamine sur l'acide cyanurique et, plus particulièrement, le composé résultant de la réaction équimoléculaire de la mélamine sur l'acide cyanurique, que cet acide soit sous sa forme énol ou céto.

Diverses sociétés vendent sous le nom de "cyanurate de mélamine" de tels composés. Il est important de sélectionner par examens ou essais préalables ceux qui ont la granulométrie la plus appropriée ainsi que la meilleure aptitude à la dispersion dans les polyamides, ce que l'on peut vérifier aisément par examen de coupes au microscope.

Par granulométrie appropriée, nous voulons dire que les résultats proposés par l'invention sont atteints quand environ 70 % des grains du cyanurate utilisé sont inférieurs ou égaux à 30 µm.

Par polyols contenant au moins quatre fois la fonction alcool, nous entendons:
- les tétrols tels que l'érythritol, le mono pentaérythritol (et ses dérivés les di et tripentaérythritols) etc...
- les pentols tels que le xylitol, l'arabitol etc...
- les hexols tels que le mannitol, le sorbitol etc...et les homologues supérieurs.

On peut, bien entendu, utiliser lesdits polyols, seuls ou en mélange.

Conviennent particulièrement bien pour la mise en oeuvre de l'invention le monopentaérythritol et le sorbitol; tout comme le cyanurate de mélamine, il importe qu'ils aient une granulométrie apte à une bonne dispersion dans les polyamides; on trouve sans difficultés dans le commerce des produits qui, possédant des grains dont 90 % sont inférieurs à 10 µm, conviennent parfaitement.

Les pentaérythritols avaient déjà été mentionnés comme constituants de compositions intumescentes (brevets U.S. 3 810 862 - 3 931 081 et 3 936 416) mais celles-ci n'avaient trait, en fait, qu'à des polyoléfines; ce qui est très surprenant, c'est que ces pentaérythritols agissent en synergie avec le cyanurate de mélamine sur les polyamides de la manière indiquée ci-dessus.

Par polyamides, nous entendons les polymères obtenus essentiellement:
- par polymérisation anionique d'un ou plusieurs lactames tels que caprolactame, oenantholactame, lauryllactame, etc...
- ou par polycondensation hydrolytique
soit, des dits lactames,
soit, d'un ou plusieurs amino-acides tels que les acides aminocaproïque, amino 7-heptanoïque, amino 11-undécanoïque, amino 12-dodécanoïque, etc...

2

soit, d'un ou plusieurs sels ou mélanges de diamines telles que l'hexaméthylène diamine, la dodécaméthylène diamine, la métaxylylène diamine, le bis-p aminocyclohexylméthane, la triméthylhexaméthylène diamine, etc... avec des diacides tels les acides isophtalique, téréphtalique, adipique, azélalque, subérique, sébacique, dodécane dicarboxylique, etc...

soit, des mélanges de tous ces monomères ce qui conduit à des copolyamides.

Nous incluons également dans le terme "polyamides" les polyétheramides et les polyétheresteramides.

L'efficacité de l'association cyanurate de mélamine-polyol résultant entre autres facteurs, du ou des monomères dont ce polyamide est issu, de la manière dont il a été fabriqué et de son poids moléculaire.

En ce qui concerne le premier point, les polyamides 6 (issu du caprolactame) et 6.6 (issu de l'adipate d'hexaméthylène diamine, possèdent, naturellement, (peut-être du fait de leur teneur plus élevée en azote) une aptitude plus faible à la combustion que les polyamides 11 et 12.

Ainsi, pour obtenir un même résultat, mettons un I.O.L. (Indice d'Oxygène Limite) supérieur à 33 suivant la norme NFT 51 071 et une classification VO, en 1,6 et 3,2 mm, selon la norme UL 94, il faudra incorporer une plus grande quantité du mélange cyanurate de mélaminepentaérythritol aux polyamides 11 et 12 qu'aux polyamides 6 et 6.6.

En ce qui concerne le deuxième point, nous voulons dire que nous avons trouvé que la nature des adjuvants utilisés lors de la fabrication du polyamide jouait un rôle essentiel, inattendu et surprenant, sur l'aptitude de ce polyamide à être ignifugé par le cyanurate de mélamine et le polyol.

Rappelons que lorsque l'on fabrique un polyamide par polycondensation hydrolytique de son monomère, on réalise la plupart du temps cette polycondensation en présence d'un adjuvant qui peut être acide (comme l'acide acétique, adipique, sébacique, dodécanedioïque... phosphorique, ou basique (comme la soude, la potasse, l'hexaméthylène diamine...), adjuvant qui a pour fonction d'hydrolyser le monomère quand c'est un lactame, d'accélérer parfois la polycondensation ou, dans tous les cas, de limiter le poids moléculaire.

Pour cette dernière raison, nous appellerons cet adjuvant un limitateur de chaînes.

Nous avons trouvé que les compositions constituées de certains polyamides - ceux résultant de la polycondensation de leurs monomères en présence d'un acide dérivé du phosphore ou d'un acide organique possédant au moins 8 atomes de carbone, monocarboxylique ou dicarboxylique tel, par exemple, entre autres, l'acide pélargonique, azélaïque, dodécanedioïque (décane-dicarboxylique, - de cyanurate de mélamine et de polyol, avaient des performances aux tests d'inflammabilité bien supérieures à celles des compositions constituées des mêmes polyamides (même monomère et même poids moléculaire) mais obtenus en présence d'un autre limitateur de chaînes, tel que l'acide adipique, par exemple, et des mêmes quantités de cyanurate de mélamine et de polyol.

Par "un acide dérivé du phosphore", nous voulons dire, entre autres, l'acide ortho, ou méta ou pyrophosphorique, ou phosphoreux ou hypophosphoreux... cet acide ayant essentiellement pour fonction d'accélérer la réaction de polycondensation tout en limitant le poids moléculaire du polymère final, comme, explicité entre autres, dans les brevets France n°s 951 924, 1 401 842 et 703 855 (pub. 2 110 661).

(On sait également que de tels acides provoquent la scission hydrolytique des lactames si on utilise de tels monomères).

A doses de cyanurate de mélamine et de polyol égales, un polyamide sera d'autant plus ininflammable qu'il contiendra plus d'acide phosphorique; c'est ainsi qu'un polyamide 11 destiné à l'injection et ayant un poids moléculaire relativement faible (viscosité inhérente, mesurée dans le méta-crésol à 25°C pour une concentration de 0,5 g pour 100 g, $\geqslant$ 0,90) obtenu par polycondensation d'acide amino 11-undécanoïque en présence de 10 pour mille d'acide orthophosphorique aura de meilleures performances qu'un polyamide 11 destiné à l'extrusion ayant un poids moléculaire relativement élevé (viscosité inhérente $\geqslant$ 1,20) obtenu par polycondensation du même monomère en présence de seulement 5 pour mille d'acide orthophosphorique.

On peut, dans ce cas, compenser l'infériorité de la qualité extrusion en augmentant les doses de cyanurate et de polyol.

Une variante de l'invention consiste à réaliser des compositions de bonne ininflammabilité en utilisant des polyamides qui, de par leur nature, ne s'y prêtent pourtant pas, tels des polyamides 11 et 12 à l'acide adipique, par exemple, ou des polyamides 11 et 12 contenant très peu d'acide dérivé du phosphore.

Cette variante consiste à enrichir ces compositions en acide dérivé du phosphore, par exemple, en ajoutant cet acide aux polyamides quand ils sont à l'état fondu, en même temps que le cyanurate de mélamine et le polyol.

Nous avons trouvé ainsi que pour procurer à des compositions, un J-O. L. égal ou supérieur à 31, valeur qu'elles n'atteindraient pas autrement, il fallait les enrichir en acide dérivé du phosphore de telle sorte que la composition finale contienne de 2 à 20 parties pour mille de cet acide, calculé en acide orthophosphorique par rapport au poids de polyamide.

L'incorporation du cyanurate de mélamine et du polyol s'effectue par malaxage de ces deux composés, finement divisés, dans le polyamide à l'état fondu. Tout appareil de malaxage assurant une bonne dispersion peut donc convenir - conviennent particulièrement, à cet effet, les extrudeuses double vis telles les Werner et Pfleiderer, les malaxeurs type Buss.

Une manière simple d'opérer consiste à mélanger à sec les granulés de polyamide, le cyanurate et le polyol et à alimenter avec ce mélange une extrudeuse double vis.

On peut également alimenter en continu une extrudeuse avec, d'une part, des granulés de polyamide et, d'autre part, un mélange préparé à l'avance, à sec, de cyanurate et de polyol.

On peut également préparer des mélanges-maîtres de polyamide, cyanurate et polyol qui seront mélangés ultérieurement avec le polyamide.

On peut également, dans un premier temps, incorporer du cyanurate de mélamine dans le polyamide par passage dans une extrudeuse et réalimenter ultérieurement la même extrudeuse avec le produit obtenu, additionné de polyol.

L'invention sera mieux explicitée par les exemples suivants qui n'ont aucun caractère limitatif.

Nous définissons tout d'abord les polyamides qui seront utilisés dans ces exemples:

(la viscosité inhérente de tous ces polyamides a été mesurée à 25°C sur leurs solutions dans le m-crésol-0,5 g de polyamide pour 100 g de crésol).

## A - Polyamide 11 adipique pour injection

On introduit dans un autoclave en acier inoxydable de l'acide 11-aminoundécanoïque, 5 pour mille de son poids d'acide adipique et de l'eau.

Après montée en température à 180°C, toutes vannes fermées, la pression de, vapeur; d'eau est montée à 10 bars. On détend jusqu'à la pression atmosphérique et, la température étant maintenue à 250°C, balaye sous faible courant d'azote la vapeur d'eau issue de la polycondensation le temps nécessaire pour obtenir un polymère de viscosité inhérente égale à 1,05 que l'on extrude hors de l'autoclave (en augmentant la pression d'azote, sous forme de joncs qui sont solidifiés par refroidissement dans l'eau - ces joncs sont ensuite découpés en granulés, granulés qui seront séchés.

## B - Polyamide 11 phosphorique pour injection

On prépare un tel polymère en opérant comme ci-dessus en chargeant l'autoclave d'eau et d'acide 11-aminoundécanoïque mais avec 8,5 pour mille d'acide-orthophosphorique en poids de ce dernier.

Du fait que l'acide phosphorique a une action catalytique, il ne sera pas nécessaire de polycondenser à 250°C aussi longtemps que ci-dessus pour obtenir un polymère de viscosité 1,05.

## C - Polyamide 12 adipique pour injection

Le même autoclave que celui utilisé ci-dessus est chargé de 30 000 parties en poids de lauryllactame, 3 000 parties d'eau et 150 parties d'acide adipique.

On monte en température à 280°C et maintient pendant 5 heures sous pression de 25 - 30 bars.

On détend en laissant la température à 250°C et on continue la polycondensation à 250°C à la pression atmosphérique et sous faible balayage d'azote pendant le temps nécessaire à l'obtention d'un polyamide de viscosité égale à 1,10.

## D - Polyamide 12 phosphorique pour injection

Comme ci-dessus, avec 30 000 parties de lauryllactame, 3 000 parties d'eau mais 255 parties d'acide ortho-phosphorique (soit 8,5 pour mille).

Le maintien sous pression à 280°C n'est que de 2 heures. On polycondense le temps nécessaire à l'obtention d'un polyamide de viscosité égale à 1,02.

## E - Polyamide 12 dodecanedioïque pour injection

On prépare un tel polymère en opérant comme dans l'exemple C avec 30 000 parties de lauryllactame, 3 000 parties d'eau et 261 parties d'acide dodécanedioïque (décane dicarboxylique 1 - 10).

On continuera la polycondensation jusqu'à obtenir un polymère de viscosité inhérente égale à 1,00.

Les granulés de ces polyamides A, B, C, D, E servent à mouler par injection des éprouvettes sur lesquelles on mesure:

- l'indice d'oxygène limite suivant la norme NFT 51 - 071
- la combustibilité suivant la publication UL 94

(Underwriters' Laboratories) - (exemples 1, 6, 12, 18 et 24, voir tableau ci-joint).

Par ailleurs, on prépare à partir de ces polyamides des compositions contenant:

- soit du cyanurate de mélamine
- soit du monopentaérythritol (ou du sorbitol),
- soit ces deux composés.

Dans tous ces essais, nous avons utilisé:

- du cyanurate de mélamine de la Société Autrichienne Chemie Linz A. G. dont 70 % des grains sont de diamètre voisin de 25 microns, et de formule $C_3H_6N_6,C_3H_3N_3O_3$
- du monopentaérythritol de la Société Celanese
- du sorbitol de la Société Lambert-Riviere vendu sous la marque Sorbitol E 420 Neosorb poudre.

Toutes ces compositions ont été réalisées suivant le même mode opératoire que nous ne décrivons que pour l'exemple 4:

4

On alimente en-continu un comalaxeur buss:

- d'une part (au moyen d'un doseur soder type T 20 à vis spirale) avec des granulés de polyamide 11 adipique obtenu en A,

- d'autre part (au moyen d'un doseur Soder type T 20 à vis jumelles) avec un mélange préalablement effectué (dans un mélanger à grande vitesse type Henschell) de 10 kg de cyanurate de mélamine et de 2 kg de monopentaérythritol.

Les réglages sont tels qu'il y ait 88 kg de polyamide pour 12 kg du mélange ci-dessus.

La température du comalaxeur est réglée à environ 235°C. Il sort de cette machine, munie d'une filière multi-trous, des joncs que l'on refroidit à l'eau et coupe en granulés.

Sur des éprouvettes moulées par injection au moyen des dits granulés convenablement séchés, on pratique les tests de combustibilité indiqués ci-dessus.

### Exemple n°17 - Introduction d'acide phosphorique pendant l'extrusion

On alimente un comalaxeur Buss avec:

- d'une part, un mélange préalablement préparé de 8120 parties de granulés de polyamide 12 à 5 pour mille acide adipique obtenus en C et de 85 parties d'acide ortho-phosphorique,

- et, d'autre part, un mélange de 1500 parties de cyanurate de mélamine et 295 parties de monopentaérithritol.

La température du comalaxeur se situe aux environs de 205°C.

Les joncs extrudés sont refroidis et découpés en granulés qui permettent de mouler par injection les éprouvettes nécessaires aux tests de combustibilité.

Tous les résultats rassemblés dans le tableau ci-joint montrent clairement que:

1° L'addition de cyanurate de mélamine seul (exemples 2, 3, 7, 8, 13, 14, 19, 20, 25) ne procure que des gains limités en ininflammabilité.

On ne gagne que quelques points en I. O. L et le classement UL reste toujours V2.

2° L'addition de monopentaérythritol seul (exemples 9, 10, 21, 22) ne procure aucun gain.

3° Par contrè, l'addition conjointe de cyanurate et de monopentaérythritol améliore nettement plus les performances (exemples 5, 16) d'une manière générale.

Les gains sont considérables (I. O. L. supérieur à 31, classement VO en 3,2 mm) quand les compositions contiennent de l'acide phosphorique

soit, parce que les polyamides utilisés en contenaient déjà (exemples 11 et 23)

soit, parce que on l'a ajouté (exemple 17)

ou quand les compositions contiennent de l'acide dodécanedioïque (exemples 26 et 27).

4° Le sorbitol conjointement avec le cyanurate augmente considérablement l'I.O.L. (exemple 28).

### Exemple n°29 - Préparation de polyamide 11 plastifié et ignifugé

On alimente une extrudeuse Werner ZDSK 53 avec:

- d'une part, 7 000 parties de granulés de polyamide 11 obtenu comme dans l'exemple B mais avec 5 pour mille d'acide ortho-phosphorique (au lieu de 8,5) et de viscosité inhérente égale à 1,55

- d'autre part, un mélange préalablement préparé de 1500 parties de cyanurate de mélamine, 300 parties de monopentaérythritol, 100 parties d'irganox 1010 et 50 parties de Tinuvin P (ces deux derniers composés, destinés à protéger la composition contre le vieillissement, sont fabriqués par la Société ciba-geigy).

Par pompe doseuse, on introduit, également, dans le mélange fondu à 240°C, au niveau du 3ème fourreau, 1 200 parties de butyl senzène sulfonamide.

Les joncs extrudés, refroidis, sont découpés en granulés qui permettent de mouler par injection les éprouvettes nécessaires aux tests d'inflammabilité.

L'indice d'oxygène limite est de 25 (sans cyanurate ni pentaérythritol, il serait de 21) et le produit est classé VO au test UL 34 en 3,2 mm d'épaisseur (autrement, l'éprouvette brûlerait entièrement).

| | Composition du melange, parties en poids | | | | | | Resultats des tests d'inflammabilité | | | |
| | Polyamide | | Additifs ajoutés lors de l'extrusion | | | | Indice d'oxygène | Classement au test UL 94 | | |
| | | | Cyanurate de Mélamine | Polyol | | Acide ortho phosphorique | | | Epaisseur des éprouvettes | |
| Ex. N° | Nature | Parties | | Nature | Parties | | limite | 0,8 mm | 1,6 mm | 3,2 mm |
|---|---|---|---|---|---|---|---|---|---|---|
| 1 | Polyamide 11 adipique (A) | 100 | 0 | Monopentaéry-thritol | 0 | 0 | 23 | | V2 | V2 |
| 2 | " | 90 | 10 | " | 0 | 0 | 25 | | V2 | V2 |
| 3 | " | 80 | 20 | " | 0 | 0 | 26 | | V2 | V2 |
| 4 | " | 88 | 10 | " | 2 | 0 | 26 | | V2 | V2 |
| 5 | " | 76 | 20 | " | 4 | 0 | 27 | | V2 | V2 |
| 6 | Polyamide 11 phosphorique (B) | 100 | 0 | " | 0 | 0 | 25 | | V2 | V2 |
| 7 | " | 90 | 10 | " | 0 | 0 | 26 | | V2 | V2 |
| 8 | " | 80 | 20 | " | 0 | 0 | 27 | | V2 | V2 |
| 9 | " | 98 | 0 | " | 2 | 0 | 25 | | V2 | V2 |
| 10 | " | 96 | 0 | " | 4 | 0 | 25 | | V2 | V2 |
| 11 | " | 88 | 10 | " | 2 | 0 | 34 | V0 | V0 | V0 |
| 12 | Polyamide 12 adipique (C) | 100 | 0 | " | 0 | 0 | 21 | | V2 | V2 |
| 13 | " | 90 | 10 | " | 0 | 0 | 25 | | V2 | V2 |
| 14 | " | 80 | 20 | " | 0 | 0 | 28 | | V2 | V2 |
| 15 | " | 88 | 10 | " | 2 | 0 | 28 | | V2 | V2 |
| 16 | " | 76 | 20 | " | 4 | 0 | 29 | | V2 | V2 |
| 17 | " | 81,2 | 15 | " | 2,95 | 0,85 | 31,9 | V2 | V2 | V2 |
| 18 | Polyamide 12 phosphorique (D) | 100 | 0 | " | 0 | 0 | 22 | | V2 | V2 |
| 19 | " | 90 | 10 | " | 0 | 0 | 25 | | V2 | V2 |
| 20 | " | 75 | 25 | " | 0 | 0 | 26 | | V2 | V2 |
| 21 | " | 98 | 0 | " | 2 | 0 | 22 | | V2 | V2 |
| 22 | " | 96 | 0 | " | 4 | 0 | 22 | | V2 | V2 |
| 23 | " | 82 | 15 | " | 3 | 0 | 35 | V2 | V0 | V0 |
| 24 | Polyamide 12 dodécanedioïque(E) | 100 | 0 | " | 0 | 0 | 22 | | V2 | V2 |
| 25 | " | 80 | 20 | " | 0 | 0 | 29 | | V2 | V2 |
| 26 | " | 80 | 17 | " | 3 | 0 | 33 | V0 | V0 | V0 |
| 27 | " | 82 | 15 | " | 3 | 0 | 31 | V0 | V0 | V0 |
| 28 | Polyamide 11 phosphorique (B) | 83 | 15 | SORBITOL | 2 | 0 | 30,6 | | V2 | V2 |

## Revendications

1. Compositions à combustibilité retardée constituées de polyamide obtenus, notamment, par polymérisation anionique de lactames ou par polycondensation hydrolytique de leur monomères en présence d'un limitateur de chaînes et de cyanurate de mélamine caractérisées en ce qu'elles comprennent en outre un polyol possédant au moins quatre fois la fonction alcool, lesdits cyanurate et polyol étant uniformément dispersés dans lesdits polyamides, dans les proportions pondérales suivantes:

a) au moins 35 % de polyamides,

b) de 0 à 30 % d'additifs, charges ou plastifiants,

c) de 1 à 25 % de cyanurate de mélamine, sous forme de grains dont 70 % présentent une taille inférieure à 30 µm,

d) de 0,5 à 10 % de polyol, la somme des constituants indiqués sous a) à d) devant dans chaque cas être égale à 100.

2. Compositions selon la revendication 1 caractérisées en ce que le polyol est choisi dans le groupe comprenant le monopentaérythritol et le sorbitol.

3. Compositions selon l'une quelconque des revendications 1 et 2 caractérisées en ce qu'elles comprennent un acide dérivé du phosphore à raison de 2 à 20 parties pour mille du poids des polyamides, cet acide étant calculé en acide orthophosphorique.

4. Compositions selon la revendication 3 caractérisées en ce que l'acide dérivé du phosphore est choisi dans le groupe comprenant les acides ortho-phosphorique, méta-phosphorique, pyrophasphorique, phosphoreux, hypophosphoreux ou leurs mélanges.

5. Procédé de fabrication des compositions selon l'une quelconque des revendications 3 et 4 caractérisé en ce que l'acide dérivé du phosphore est introduit sous forme de limitateur de chaînes lors de la polycondensation hydrolytique des monomères engendrant les polyamides.

6. Procédé de fabrication des compositions selon l'une quelconque des revendications 3 et 4 caractérisé en ce que on les enrichit en acide dérivé du phosphore par addition de cet acide aux polyamides qui les constituent.

7. Compositions selon l'une quelconque des revendications 1 à 4 caractérisées en ce qu'elles sont constituées de polyamides 11 ou 12 obtenus par polycondensation hydrolytique de leurs monomères respectifs en présence d'acide dodécanedioïque.

## Patentansprüche

1. Gemische mit verzögerter Brennbarkeit aus Polyamiden, die insbesondere durch anionische Polymerisation von Laktamen oder durch hydrolytische Polykondensation ihrer Monomere in Anwesenheit eines Kettenlängenbegrenzers und von Melamincyanurat hergestellt wurden, dadurch gekennzeichnet, daß sie zusätzlich ein Polyol mit mindestens 4 Alkoholgruppen enthalten und daß das genannte Cyanurat und Polyol in den genannten Polyamiden in folgenden Gewichtsverhältnissen gleichmäßig verteilt sind:
a) mindestens 35 % Polyamide
b) 0 bis 30 % Zusätze, Füllstoffe oder Weichmacher
c) 1 bis 25 % Melamincyanurat in Form von Körnern, von denen 70 % eine Größe unter 30 µm aufweisen.
d) 0,5 bis 10 % Polyol,
wobei die Summe der unter a) bis d) angegebenen Bestandteile in jedem Fall gleich 100 sein muß.

2. Gemische nach Patentanspruch 1, dadurch gekennzeichnet, daß das Polyol aus der Monopentaerythritol und Sorbitol enthaltenden Gruppe ausgewählt ist.

3. Gemische nach einem der Patentansprüche 1 und 2, dadurch gekennzeichnet, daß sie eine vom Phosphor abgeleitete Säure im Verhältnis von 2 bis 20 Teilen auf Tausend Gewichtsteile der Polyamide enthalten, wobei diese Säure als Orthophosphorsäure berechnet wird.

4. Gemische nach Patentanspruch 3, dadurch gekennzeichnet, daß die vom Phosphor abgeleitete Säure aus der Gruppe gewählt wird, die Ortho-, Meta-, Pyrophosphorsäure, phosphorige und hypophosphorige Säure oder deren Gemische umfaßt.

5. Verfahren zur Herstellung der Gemische nach einem der Patentansprüche 3 und 4, dadurch gekennzeichnet, daß die vom Phosphor abgeleitete Säure als Kettenlängenbegrenzer bei der hydrolytischen Polykondensation der die Polyamide bildenden Monomere zugesetzt wird.

6. Verfahren zur Herstellung der Gemische nach einem der Patentansprüche 3 und 4, dadurch gekennzeichnet, daß man sie mit von Phosphor abgeleiteter Säure durch Zusatz dieser Säure zu den sie bildenden Polyamiden anreichert.

7. Gemische nach irgendeinem der Patentansprüche 1 bis 4, dadurch gekennzeichnet, daß sie aus den durch hydrolytische Polykondensation ihrer jeweiligen Monomere in Anwesenheit von Dodecan-di-säure hergestellten Polyamiden 11 oder 12 bestehen.

## Claims

1. Compositions with retarded combustibility, consisting of polyamide obtained particularly by anionic polymerization of lactams or by hydrolytic polycondensation of their monomers in the presence of a chain limiter and of melamine cyanurate, which are characterized in that they additionally include a polyol containing at least four times the alcohol group, the said cyanurate and polyol being uniformly dispersed in the said polyamides in the following proportions by weight:
a) at least 35 % of polyamides,
b) from 0 to 30 % of additives, fillers or plasticizers,
c) from 1 to 25 % of melamine cyanurate in the form of particles, 70 % of which are below 30 µm in size, and
d) from 0,5 to 10 % of polyol,
the sum of the constituents shown under a) to d) having to be equal to 100 in each case.

2. Compositions according to Claim 1, characterized in that the polyol is chosen from the group including monopentaerythritol and sorbitol.

3. Compositions according to either of Claims 1 and 2, characterized in that they include an acid derived from phosphorus in a proportion of 2 to 20 parts per thousand of the weight of the polyamides, this acid being calculated as orthophosphoric acid.

4. Compositions according to Claim 3, characterized in that the acid derived from phosphorus is chosen from the group including the orthophosphoric, metaphosphoric, pyrophosphoric, phosphorous and hypophosphorous acids or mixtures thereof.

5. Process for the manufacture of the compositions according to either of Claims 3 and 4, characterized in that the acid derived from phosphorus is introduced in the form of a chain 1 imiter during the hydrolytic polycondensation of the monomers giving rise to the polyamides.

6. Process for the manufacture of the compositions according to either of Claims 3 and 4, characterized in that they are enriched in acid derived from phosphorus by addition of this acid to the polyamides of which they consist.

7. Compositions according to any one of Claims 1 to 4, characterized in that they consist of polyamides 11 or 12 obtained by hydrolytic polycondensation of their corresponding monomers in the presence of dodecanedioic acid.